# EUROPÄISCHE PATENTSCHRIFT

(11) **EP 3 599 137 B1**
(45) Veröffentlichungstag und Bekanntmachung des Hinweises auf die Patenterteilung: **24.02.2021**
(21) Anmeldenummer: 19171737.0
(22) Anmeldetag: 30.04.2019
(51) Int. Cl.: B60S 1/04

(54) **KRAFTFAHRZEUG-BEFESTIGUNGSSYSTEM**
MOTOR VEHICLE FASTENING SYSTEM
SYSTÈME DE FIXATION POUR VÉHICULE AUTOMOBILE

(30) Priorität: 23.07.2018 DE 102018117748
(43) Veröffentlichungstag der Anmeldung: 29.01.2020
(73) Patentinhaber: Huf Hülsbeck & Fürst GmbH & Co. KG, 42551 Velbert (DE)
(72) Erfinder: WIETKAMP, Stephan, 48161 Münster (DE)
(74) Vertreter: Zenz Patentanwälte Partnerschaft mbB

(56) Entgegenhaltungen:
- EP-A1- 1 613 516
- EP-A1- 1 896 303
- DE-B3-102017 206 133
- FR-A1- 2 964 617
- US-A1- 2018 186 337

## Beschreibung

Die Erfindung richtet sich auf ein Kraftfahrzeug-Befestigungssystem, bei welchem ein erstes Kraftfahrzeug-Bauteil an einem zweiten Kraftfahrzeug-Bauteil befestigt ist.

Solche Kraftfahrzeug-Befestigungssysteme dienen zum Beispiel dazu, einen Aktuator an einem Karosserieblech zu befestigen. Zur Befestigung sind unterschiedliche Befestigungsmöglichkeiten bekannt, wie beispielsweise Schraubverbindungen unter Verwendung eines oder mehrerer Schraubbolzen sowie Nietverbindungen unter Verbindung eines oder mehrerer Nietbolzen. Darüber hinaus sind Klick- und Clips-Verbindungen aus dem Stand der Technik bekannt, um Aktuatoren oder andere Kraftfahrzeug-Bauteile an einem Karosserieblech eines Kraftfahrzeugs anzubringen, wobei die Klick- und Clips-Verbindungen dabei meistens entsprechend der von Fahrzeug zu Fahrzeug variierenden Wandstärke des Karosserieblechs anzupassen sind.

Aus der DE 10 2017 206 133 B3 ist eine Wischerbaugruppe für ein Kraftfahrzeug bekannt. Die Wischerbaugruppe weist eine Scheibenwischerhalterung auf, die durch eine in Längsrichtung des Kraftfahrzeugs vordere Verbindungsanordnung mit einem ersten Karosserieteil und durch eine hintere Verbindungsanordnung mit einem zweiten Karosserieteil verbunden ist. Dabei ist die vordere Verbindungsanordnung dazu ausgebildet, bei Überschreiten einer in Längsrichtung wirkenden Schwellkraft zwischen Scheibenwischerhalterung und erstem Karosseriebauteil planmäßig nachzugeben, so dass das erste Karosserieteil relativ zur Scheibenwischerhalterung nach hinten bewegbar ist, um das Crashverhalten der Wischerbaugruppe zu optimieren.

Ferner ist aus der US 2018/01866337 A1 ein Befestigungssystem für einen Scheibenwischermotor bekannt, welcher über sein Gehäuse an einer Tragplatte lösbar angebracht ist. Die Tragplatte weist mehrere Durchgangsöffnungen auf, wobei an dem Gehäuse mehrere Fixierungsansätze ausgebildet sind, die sich durch die Durchgangsöffnungen der Tragplatte hindurch erstrecken. Ein jeweiliger Fixierungsansatz weist dabei einen Fixierungsabschnitt auf, der auf dem Rand der zugeordneten Durchgangsöffnung aufliegt und den Rand hintergreift.

Der Erfindung liegt die Aufgabe zugrunde eine Lösung zu schaffen, die auf konstruktiv einfache Weise ein verbessertes und für die Montage komfortableres Kraftfahrzeug-Befestigungssystem bereitstellt, welches sich durch eine einfache Herstellbarkeit und eine gleichzeitig hohe Festigkeit der Verbindung zwischen einem ersten Kraftfahrzeug-Bauteil und einem zweiten Kraftfahrzeug-Bauteil auszeichnet.

Diese Aufgabe wird erfindungsgemäß gelöst durch ein Kraftfahrzeug-Befestigungssystem mit einem ersten Kraftfahrzeug-Bauteil, einem zweiten Kraftfahrzeug-Bauteil und einer Befestigungsplatte, wobei das erste Kraftfahrzeug-Bauteil mit der Befestigungsplatte lösbar verbunden ist. Auf einer dem ersten Kraftfahrzeug-Bauteil abgewandten Seitenfläche des zweiten Kraftfahrzeug-Bauteils ist ein Klemmrand ausgebildet, wobei eine dem ersten Kraftfahrzeug-Bauteil zugewandte Seitenfläche des zweiten Kraftfahrzeug-Bauteils eine Klemmfläche ausbildet. Die Befestigungsplatte weist wenigstens einen Fixierungsansatz auf, welcher sich zumindest abschnittsweise durch eine in dem zweiten Kraftfahrzeugbauteil ausgeformte und den Klemmrand aufweisende Durchgangsöffnung erstreckt, wobei an einem freien Ende des Fixierungsansatzes ein Fixierungsabschnitt ausgebildet ist, welcher zumindest abschnittsweise auf dem Klemmrand aufliegt und den Klemmrand hintergreift. Die Befestigungsplatte weist wenigstens ein Auflageelement auf, auf welchem die Klemmfläche derart aufliegt, dass der Fixierungsabschnitt und das Auflageelement den Klemmrand und die Klemmfläche zwischen sich einklemmen. Der Klemmrand und die Klemmfläche sind mit einem vorbestimmten Höhenabstand zueinander ausgebildet, wobei das wenigstens eine Auflageelement als ein sich in Richtung der Klemmfläche erstreckender und die Klemmfläche in Richtung des Fixierungsabschnitts drückender Stützsteg ausgebildet ist. Schließlich ist der Stützsteg mit einer Außenumfangsnut ausgebildet, welche den Stützsteg in einen Entkopplungsabschnitt und einen Stützabschnitt unterteilt, wobei die Befestigungsplatte ein Durchgangsloch mit einem ersten Lochabschnitt, welcher einen an die Außenumfangsnut angepassten Fixierungsrand aufweist, und einem zweiten Lochabschnitt, welcher größer ausgebildet ist als der Außenumfang des Stützstegs, aufweist, und wobei die Außenumfangsnut in den Fixierungsrand eingesteckt angeordnet ist, der Entkopplungsabschnitt die Befestigungsplatte von dem ersten Kraftfahrzeug-Bauteil auf Abstand hält und der Stützabschnitt gegen die Klemmfläche drückt.

Vorteilhafte und zweckmäßige Ausgestaltungen und Weiterbildungen der Erfindung ergeben sich aus den Unteransprüchen.

Durch die Erfindung wird ein Kraftfahrzeug-Befestigungssystem zur Verfügung gestellt, welches sich durch eine einfache und kostengünstige Konstruktion auszeichnet. Das erste Kraftfahrzeug-Bauteil ist mit der Befestigungsplatte lösbar verbunden, wobei sich ferner die Befestigungsplatte an dem zweiten Kraftfahrzeug-Bauteil festklemmt. Die Befestigungsplatte dient folglich als eine Art Adapter, über welchen das erste Kraftfahrzeug-Bauteil an dem zweiten Kraftfahrzeug-Bauteil lösbar befestigt ist. Durch das Festklemmen braucht bei der Anbringung des ersten Kraftfahrzeug-Bauteils an dem zweiten Kraftfahrzeug-Bauteil kein Werkzeug verwendet werden, was die Montage in erheblichem Maße erleichtert. Das erste Kraftfahrzeug-Bauteil liegt gemäß der Erfindung nicht direkt auf der Befestigungsplatte auf und überträgt keinen Schall über die Befestigungsplatte auf das zweite Kraftfahrzeug-Bauteil. Dadurch, dass die Außenumfangsnut in den Fixierungsrand eingesteckt angeordnet ist, der Entkopplungsabschnitt die Befestigungsplatte von dem ersten Kraftfahrzeug-Bauteil auf Abstand hält und der Stützabschnitt gegen die Klemmfläche drückt, ist zwischen dem Stützsteg und der Befestigungsplatte eine formschlüssige Verbindung ausgebildet, wenn sich der Stützsteg in dem ersten Lochabschnitt befindet und der Fixierungsrand abschnittsweise in die Außenumfangsnut eingreift.

Die Erfindung sieht in Ausgestaltung vor, dass das zweite Kraftfahrzeug-Bauteil als ein Karosserieblech mit einer vorgegebenen Wandstärke ausgebildet ist.

Für eine sichere Befestigung ist dann in weiterer Ausgestaltung vorgesehen, dass die vorgegebene Wandstärke des Karosserieblechs gleich dem vorbestimmten Höhenabstand ist.

Ebenso ist für eine sichere Befestigung in Ausgestaltung der Erfindung vorgesehen, dass die vorgegebene Wandstärke des Karosserieblechs kleiner als der vorbestimmte Höhenabstand ist, wobei die Durchgangsöffnung und der Klemmrand an einer von dem ersten Kraftfahrzeug-Bauteil weg gerichteten Vertiefung in dem Karosserieblech ausgebildet sind, und wobei die Klemmfläche außerhalb der Vertiefung an dem Karosserieblech angeordnet ist.

Konstruktiv besonders günstig ist es, wenn der Fixierungsabschnitt als ein verdicktes Ende ausgebildet ist, wobei die Durchgangsöffnung des zweiten Kraftfahrzeug-Bauteils einen Montageabschnitt, welcher kleiner als das verdickte Ende und größer als der Fixierungsansatz ausgebildet ist, und einen Demontageabschnitt, welcher größer als das verdickte Ende ausgebildet ist, aufweist. Zur Befestigung des ersten Kraftfahrzeug-Bauteils an dem zweiten Kraftfahrzeug-Bauteil wird der Fixierungsabschnitt durch den Demontageabschnitt gesteckt und anschließend in Richtung des Montageabschnitts verschoben, so dass eine formschlüssige Verbindung ausgebildet ist.

Im Hinblick auf eine sichere Fixierung des ersten Kraftfahrzeug-Bauteils an dem zweiten Kraftfahrzeug-Bauteil ist es von Vorteil, wenn an dem zweiten Kraftfahrzeug-Bauteil eine Rastaufnahme ausgeformt ist und an der Befestigungsplatte ein Rastmittel angeformt ist, wobei das Rastmittel mit der Rastaufnahme in Eingriff steht und eine Bewegung des Fixierungsabschnitts aus dem Montageabschnitt in Richtung des Demontageabschnitts blockiert. Auf diese Weise ist die formschlüssige Verbindung zwischen dem Fixierungsansatz und dem zweiten Kraftfahrzeug-Bauteil gesichert.

Zur Befestigung des ersten Kraftfahrzeug-Bauteils sieht die Erfindung vor, dass wenigstens zwei Auflageelemente vorgesehen sind, die jeweils hohlzylinderförmig ausgebildet sind, wobei sich jeweils ein Fixierungselement mit einem Stützkopf durch ein jeweiliges hohlzylinderförmig ausgebildetes Auflageelement hindurch erstreckt und mit dem ersten Kraftfahrzeug-Bauteil in Eingriff steht, und wobei der jeweilige Stützkopf auf einer innerhalb des jeweiligen hohlzylinderförmig ausgebildeten Auflageelements ausgebildeten Stufe aufliegt. Dadurch sind die Auflageelemente und das erste Kraftfahrzeug-Bauteil über eine kraftschlüssige Verbindung miteinander lösbar verbunden, wobei die Auflageelemente ferner über eine formschlüssige Verbindung mit der Befestigungsplatte lösbar verbunden sind.

Die Erfindung sieht in Ausgestaltung des Kraftfahrzeug-Befestigungssystems vor, dass die Befestigungsplatte wenigstens zwei Durchgangslöcher aufweist, die sich symmetrisch zueinander erstrecken, wobei die zweiten Lochabschnitte der Durchgangslöcher geringer beabstandet zueinander angeordnet sind als die ersten Lochabschnitte der Durchgangslöcher. Auf diese Weise ist eine formschlüssige Verbindung zwischen der Befestigungsplatte und dem ersten Kraftfahrzeug-Bauteil geschaffen, die nicht gelöst werden kann, da eine Bewegung der Befestigungsplatte relativ zu den in den ersten Lochabschnitten angeordneten Auflageelementen nicht möglich ist und damit die Auflageelemente auch nicht in die zweiten Lochabschnitte gelangen können.

Die Klemmwirkung, mit welcher das zweite Kraftfahrzeug-Bauteil an der Befestigungsplatte festgeklemmt ist, lässt sich dadurch optimieren, indem das wenigstens eine Auflageelement elastisch verformbar ausgebildet ist. Dadurch weist das Kraftfahrzeug-Befestigungssystem insgesamt eine gewisse Toleranz für das Festzuklemmende zweite Kraftfahrzeug-Bauteil auf.

Eine besonders sichere und feste Verbindung für das erfindungsgemäße Kraftfahrzeug-Befestigungssystem ist dadurch realisierbar, wenn das erste Kraftfahrzeug-Bauteil und die Befestigungsplatte über eine formschlüssige Verbindung und/oder kraftschlüssige Verbindung akustisch voneinander entkoppelt miteinander verbunden sind.

Schließlich in Ausgestaltung der Erfindung vorgesehen, dass das erste Kraftfahrzeug-Bauteil als ein Aktuator ausgebildet ist.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte und bevorzugte Ausführungsbeispiele der Erfindung dargestellt sind.

In der Zeichnung zeigt:
Figur 1 eine perspektivische Draufsicht auf ein Kraftfahrzeug-Befestigungssystem gemäß der Erfindung,
Figur 2 eine perspektivische Unteransicht auf das in Figur 1 gezeigte Kraftfahrzeug-Befestigungssystem, wobei ein als ein Karosserieblech ausgebildetes zweites Kraftfahrzeug-Bauteil nicht dargestellt ist,
Figur 3 eine perspektivische Einzelteilansicht für die in Figur 2 gezeigte Darstellung,
Figur 4 eine perspektivische Ansicht auf eine Befestigungsplatte des erfindungsgemäßen Kraftfahrzeug-Befestigungssystems,
Figur 5 eine weitere perspektivische Darstellung der Befestigungsplatte aus Figur 4,
Figur 6 eine perspektivische Darstellung eines Auflageelements des erfindungsgemäßen Kraftfahrzeug-Befestigungssystems,
Figur 7 eine perspektivische Schnittdarstellung des Auflageelements aus Figur 6 und eines Fixierungselements des erfindungsgemäßen Kraftfahrzeug-Befestigungssystems,
Figur 8 eine perspektivische Detailansicht auf das Auflageelement, die Befestigungsplatte und ein erstes Kraftfahrzeug-Bauteil des erfindungsgemäßen Kraftfahrzeug-Befestigungssystems,
Figur 9 eine weitere Detailansicht auf das Auflageelement, die Befestigungsplatte, das erste Kraftfahrzeug-Bauteil und das zweite Kraftfahrzeug-Bauteil des erfindungsgemäßen Kraftfahrzeug-Befestigungssystems,
Figur 10 eine perspektivische Ansicht auf ein zweites Kraftfahrzeug-Bauteil gemäß einer ersten Ausführungsform,
Figur 11 eine Detailansicht auf das Auflageelement, die Befestigungsplatte, das erste Kraftfahrzeug-Bauteil und das zweite Kraftfahrzeug-Bauteil, welches gemäß der ersten Ausführungsform ausgebildet ist,
Figur 12 eine seitliche Perspektivansicht auf das zweite Kraftfahrzeug-Bauteil gemäß der ersten Ausführungsform,
Figur 13 eine weitere Detailansicht auf das Auflageelement, die Befestigungsplatte, das erste Kraftfahrzeug-Bauteil und das zum Teil geschnittene zweite Kraftfahrzeug-Bauteil, welches gemäß der ersten Ausführungsform ausgebildet ist,
Figur 14 eine perspektivische Ansicht auf ein zweites Kraftfahrzeug-Bauteil gemäß einer zweiten Ausführungsform,
Figur 15 eine Detailansicht auf das Auflageelement, die Befestigungsplatte, das erste Kraftfahrzeug-Bauteil und das zweite Kraftfahrzeug-Bauteil, welches gemäß der zweiten Ausführungsform ausgebildet ist,
Figur 16 eine seitliche Perspektivansicht auf das zweite Kraftfahrzeug-Bauteil gemäß der zweiten Ausführungsform,
Figur 17 eine weitere Detailansicht auf das Auflageelement, die Befestigungsplatte, das erste Kraftfahrzeug-Bauteil und das zum Teil geschnittene zweite Kraftfahrzeug-Bauteil, welches gemäß der zweiten Ausführungsform ausgebildet ist,
Figur 18 eine perspektivische Ansicht auf das erfindungsgemäße Kraftfahrzeug-Befestigungssystem vor Befestigung des ersten Kraftfahrzeug-Bauteils an dem zweiten Kraftfahrzeug-Bauteil,
Figur 19 eine perspektivische Ansicht auf das erfindungsgemäße Kraftfahrzeug-Befestigungssystem in einem Montageschritt zur Befestigung des ersten Kraftfahrzeug-Bauteils an dem zweiten Kraftfahrzeug-Bauteil und
Figur 20 eine perspektivische Ansicht auf das erfindungsgemäße Kraftfahrzeug-Befestigungssystem nach erfolgter Befestigung des ersten Kraftfahrzeug-Bauteils an dem zweiten Kraftfahrzeug-Bauteil.

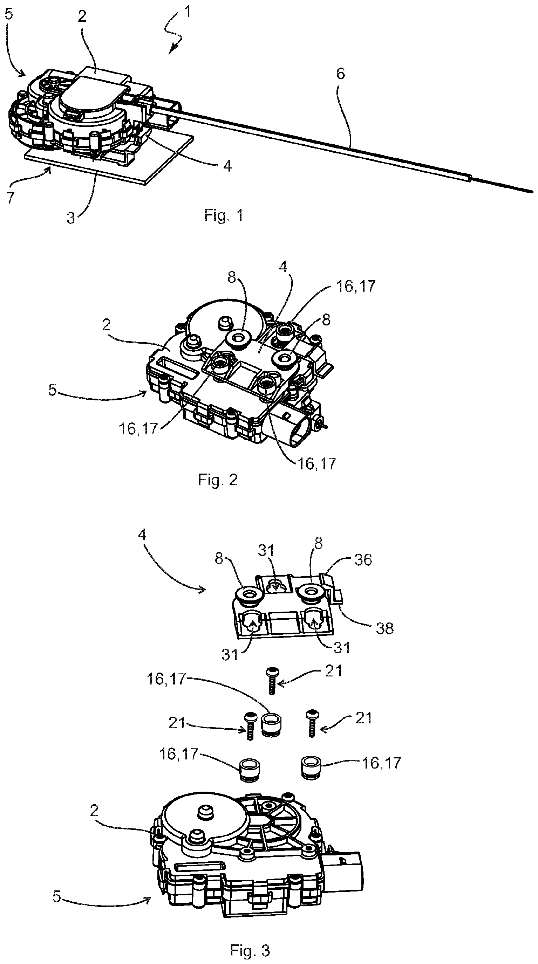

Die Figur 1 zeigt in perspektivischer Ansicht ein Kraftfahrzeug-Befestigungssystem 1, bei welchem ein erstes Kraftfahrzeug-Bauteil 2 an einem zweiten Kraftfahrzeug-Bauteil 3 befestigt ist, wobei zur Befestigung eine Befestigungsplatte 4 verwendet wird, die zwischen dem ersten Kraftfahrzeug-Bauteil 2 und dem zweiten Kraftfahrzeug-Bauteil 3 angeordnet ist. Das erste Kraftfahrzeug-Bauteil 2 ist in den in den Figuren dargestellten Ausführungsbeispielen als ein Aktuator 5 mit einem Zugseil 6 ausgebildet, wobei der Aktuator beispielsweise als eine Zuziehhilfe bei einem Heckschloss eingesetzt werden kann. Das zweite Kraftfahrzeug-Bauteil 3 ist hingegen in den gezeigten Ausführungsbeispielen als ein Karosserieblech 7 ausgeführt, an welchem das erste Kraftfahrzeug-Bauteil 2 bzw. der Aktuator 5 über die Befestigungsplatte 4 befestigt ist.

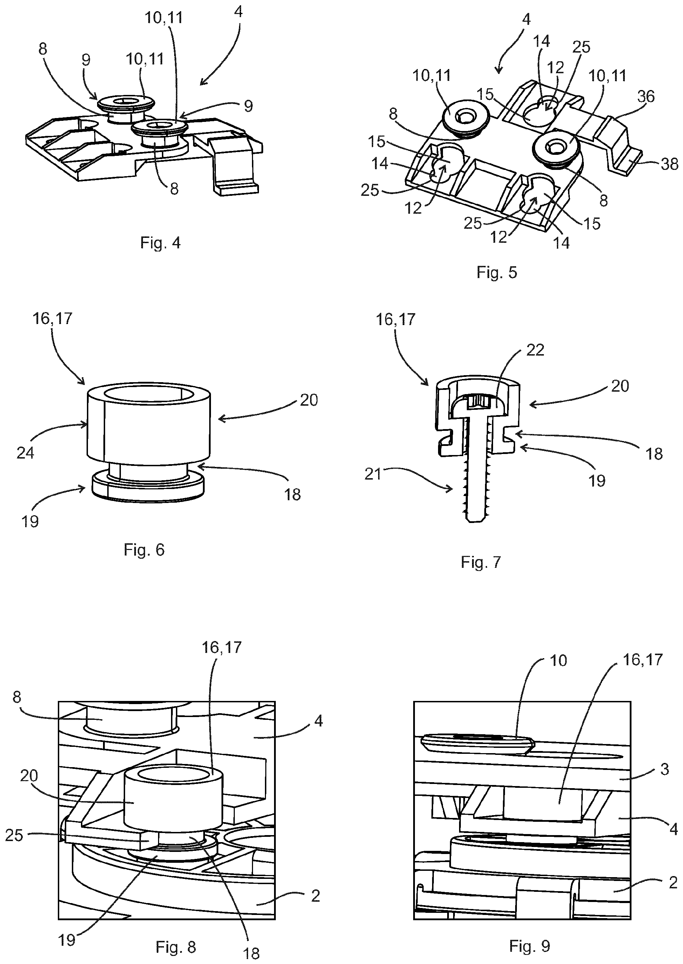

Die Figuren 2 bis 9 zeigen bauliche Details für eine Befestigung des ersten Kraftfahrzeug-Bauteils 2 an der Befestigungsplatte 4, wobei die Befestigung lösbar ausgebildet ist. Aus den Figuren 2 bis 9 ist ersichtlich, dass die Befestigungsplatte 4 in den gezeigten Ausführungsbeispielen zwei Fixierungsansätze 8 aufweist, die sich in eine von dem ersten Kraftfahrzeug-Bauteil 2 wegweisende Richtung erstrecken. An einem freien Ende 9 eines jeweiligen Fixierungsansatzes 8 ist jeweils ein Fixierungsabschnitt 10 ausgebildet (siehe zum Beispiel Figur 4). Die Fixierungsabschnitte 10 sind jeweils Knauf-förmig bzw. als ein verdicktes Ende 11 ausgebildet. Die Befestigungsplatte 4 weist ferner drei Durchgangslöcher 12 auf, die versetzt zu den Fixierungsabschnitten 10 an der Befestigungsplatte 4 angeordnet und ausgebildet sind. Jedes Durchgangsloch 12 weist dabei einen ersten Lochabschnitt 14 und einen zweiten Lochabschnitt 15 auf, wobei der zweite Lochabschnitt 15 im Durchmesser bzw. Querschnitt größer ausgebildet ist als der erste Lochabschnitt 14. Es versteht sich, dass wenigstens ein Fixierungsansatz 8 und wenigstens ein Durchgangsloch 12 an der Befestigungsplatte 4 ausgebildet sein können. Wie aus den Figuren ersichtlich ist, sind zwei Durchgangslöcher 12 auf einer Seite von den beiden hintereinander liegend angeordneten Fixierungsansätzen 8 angeordnet, wohingegen das andere Durchgangsloch 12 auf der anderen Seite von den beiden hintereinander liegend angeordneten Fixierungsansätzen 8 angeordnet ist.

Die Durchgangslöcher 12 dienen dazu, die Befestigungsplatte 4 an dem ersten Kraftfahrzeug-Bauteil 2 zu befestigen. Zu diesem Zweck weist das Kraftfahrzeug-Befestigungssystem 1 in den gezeigten Ausführungsbeispielen drei Auflageelemente 16 auf, die sich in einem zusammengebauten Zustand des Kraftfahrzeug-Befestigungssystems 1 in Richtung des zweiten Kraftfahrzeug-Bauteils 3 erstrecken und der Abstützung des zweiten Kraftfahrzeug-Bauteils 3 dienen (siehe zum Beispiel Figur 9). Die Auflageelemente 16 sind jeweils als ein hohlzylinderförmiger Stützsteg 17 ausgebildet. Ein jeweiliger Stützsteg 17 weist eine Außenumfangsnut 18 auf, wobei die Außenumfangsnut 18 den Stützsteg 17 in seiner Längsrichtung in einen Entkopplungsabschnitt 19 und einen Stützabschnitt 20 unterteilt (siehe zum Beispiel Figur 6). Im zusammengebauten Zustand des Kraftfahrzeug-Befestigungssystems 1 liegt der Entkopplungsabschnitt 19 auf dem ersten Kraftfahrzeug-Bauteil 2 auf (siehe zum Beispiel Figur 8) und hält dadurch die Befestigungsplatte 4 von dem ersten Kraftfahrzeug-Bauteil 2 auf Abstand, wohingegen der Stützabschnitt 20 das zweite Kraftfahrzeug-Bauteil 3 abstützt. Zur Montage der Befestigungsplatte 4 an dem ersten Kraftfahrzeug-Bauteil 2 werden die Stützstege 17 über eine kraftschlüssige Verbindung an dem ersten Kraftfahrzeug-Bauteil 2 befestigt. Zu diesem Zweck ist eine Schraubverbindung vorgesehen. Durch jedes hohlzylinderförmig ausgebildete Auflageelement 16 erstreckt sich ein schraubenartig ausgebildetes Fixierungselement 21 mit einem Stützkopf 22 hindurch (siehe zum Beispiel Figur 7), wobei die Fixierungselemente 21 in das erste Kraftfahrzeug-Bauteil 2 eingeschraubt sind und somit mit dem ersten Kraftfahrzeug-Bauteil 2 in Eingriff stehen. Ein jeweilige Stützkopf 22 liegt dabei auf einer innerhalb des jeweiligen hohlzylinderförmig ausgebildeten Auflageelements 16 ausgebildeten Stufe 23 auf, so dass der Stützkopf 22 ein jeweiliges Auflageelement 16 gegen das erste Kraftfahrzeug-Bauteil 2 verspannt. Zur Befestigung der Auflageelemente 16 an der Befestigungsplatte 4 werden die Auflageelemente 16 durch die jeweiligen zweiten Lochabschnitte 15 der Befestigungsplatte gesteckt und anschließend in den ersten Lochabschnitt 14 verschoben. Der zweite Lochabschnitt 15 eines jeweiligen Durchgangsloches 12 ist zu diesem Zweck größer ausgebildet als der Außenumfang 24 des jeweiligen Auflageelementes 16 bzw. Stützstegs 17, wohingegen ein jeweiliger erster Lochabschnitt 14 einen an die Außenumfangsnut 18 angepassten Fixierungsrand 25 aufweist. Im zusammengebauten Zustand ist die Außenumfangsnut 18 eines jeweiligen Auflageelementes 16 bzw. Stützstegs 17 zumindest abschnittsweise in den Fixierungsrand 25 eingesteckt angeordnet, wie es beispielsweise aus der Figur 8 ersichtlich ist, in welcher die Befestigungsplatte 4 zum Teil "weggeschnitten" dargestellt ist. Wie zum Beispiel aus Figur 5 ersichtlich ist, sind zwei Durchgangslöcher 12 auf einer Seite der Fixierungsansätze 8 der Befestigungsplatte 4 angeordnet, wohingegen ein Durchgangsloch 12 auf der anderen Seite der Fixierungsansätze 8 der Befestigungsplatte 4 ausgebildet ist. Dabei sind die zweiten Lochabschnitte 15 der sich gegenüberliegenden und durch die Fixierungsansätze 8 getrennt voneinander angeordneten Durchgangslöcher 12 geringer zueinander beabstandet angeordnet als die ersten Lochabschnitte 14 der sich gegenüberliegenden und durch die Fixierungsansätze 8 getrennt voneinander angeordneten Durchgangslöcher 12. Dies hat den Grund, dass zunächst die Auflageelemente 16 in die beiden auf einer Seite von den Fixierungsansätzen 8 liegenden zweiten Lochabschnitte 15 der Durchgangslöcher 12 eingesteckt, in die jeweiligen ersten Lochabschnitte 14 angeordnet und anschließend mit dem ersten Kraftfahrzeug-Bauteil 2 verschraubt werden, bevor dann das letzte Auflageelement 16 angeordnet und mit dem ersten Kraftfahrzeug-Bauteil 2 verschraubt wird. Denn durch die Herstellung der kraftschlüssigen Verbindung mit Hilfe der Fixierungselemente 21 und durch die Anschließende Herstellung der formschlüssigen Verbindung mit Hilfe der in die Außenumfangsnuten 18 eingreifenden ersten Lochabschnitte 14 ist es nun nicht mehr möglich, dass die Auflageelemente 16 aus den ersten Lochabschnitten 14 herausbewegt werden können. Auf die vorstehend beschriebene Weise sind die Befestigungsplatte 4 und das erste Kraftfahrzeug-Bauteil 2 sowohl formschlüssig als auch kraftschlüssig miteinander lösbar verbunden. Alternativ wäre es auch denkbar, dass die Auflageelemente 16 einstückig an und mit der Befestigungsplatte 4 ausgebildet sind, wobei die Mehrteiligkeit darin begründet ist, dass die Auflageelemente 16 im Gegensatz zu der Befestigungsplatte 4 elastisch verformbar ausgebildet sind und der akustischen Entkopplung von Befestigungsplatte 4 und erstem Kraftfahrzeug-Bauteil 2 dienen, damit kein Schall von dem ersten Kraftfahrzeug-Bauteil 2 auf das zweite Kraftfahrzeug-Bauteil 3 übertragen wird und ungewünschte Geräusche entstehen.

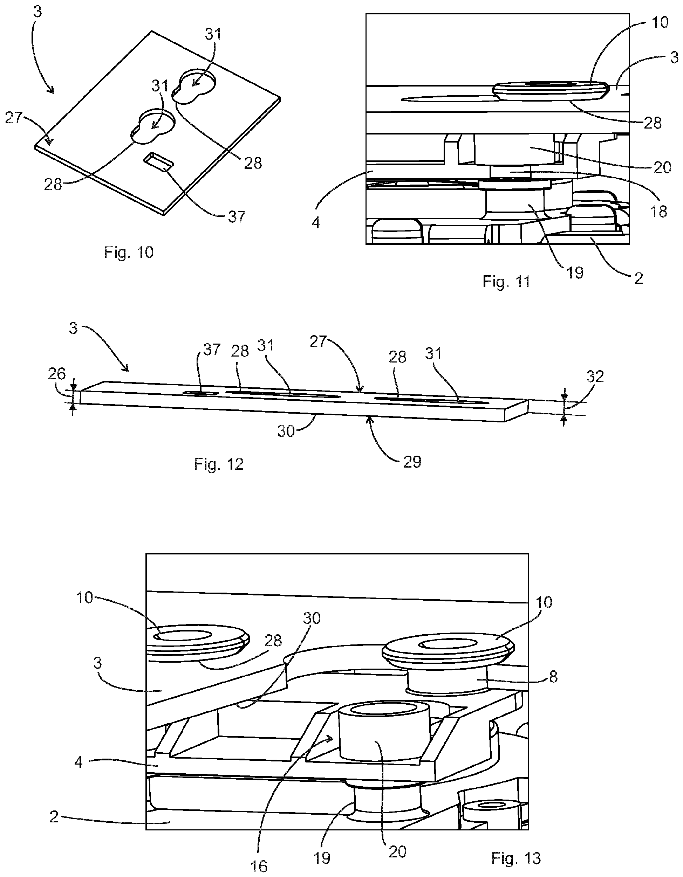

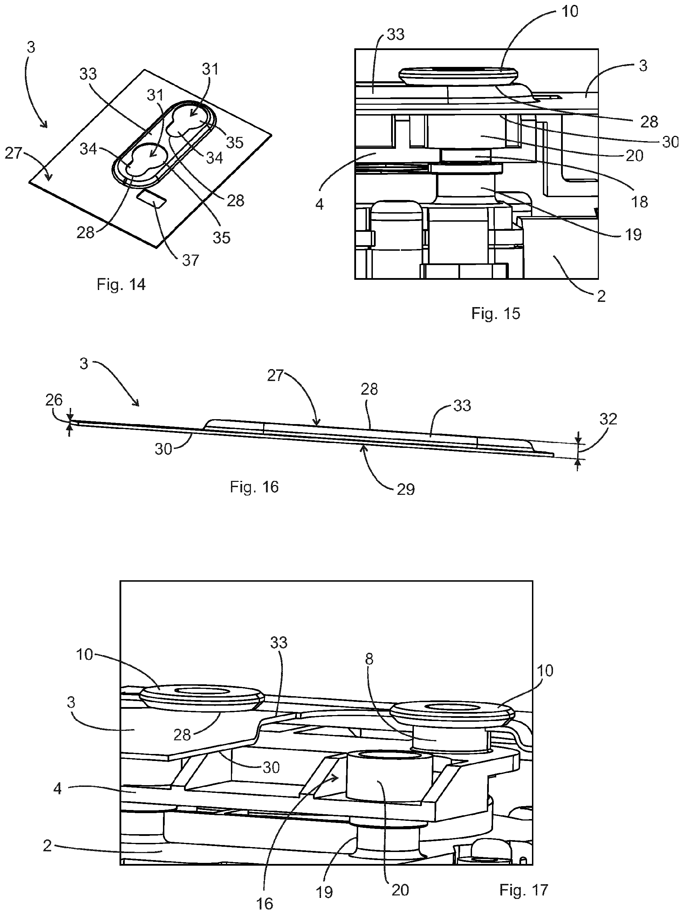

Die Figuren 10 bis 13 zeigen eine erste Ausführungsform für das zweite Kraftfahrzeug-Bauteil 3, wohingegen die Figuren 14 bis 17 eine zweite Ausführungsform für das zweite Kraftfahrzeug-Bauteil 3 zeigen. Die Befestigungsplatte 4, die Auflageelemente 16 und das erste Kraftfahrzeug-Bauteil 2 sind hingegen für beide Ausführungsformen identisch ausgebildet, so dass die nachstehende Beschreibung für beide Ausführungsformen gilt und Unterschiede zwischen den beiden Ausführungsformen explizit angesprochen werden. Bei dem zweiten Kraftfahrzeug-Bauteil 3 handelt es sich wie eingangs beschrieben um ein Karosserieblech 7. Während die erste Ausführungsform ein Karosserieblech 7 mit einer Wandstärke 26 von 3mm aufweist (siehe zum Beispiel Figur 12), was typisch für ein Karosserieblech 7 aus Kunststoff ist, weist bei der zweiten Ausführungsform das Karosserieblech 7 eine Wandstärke 26 von 0,7mm auf (siehe zum Beispiel Figur 16), was typisch für ein Karosserieblech 7 aus Stahl ist. Wie den Figuren 10 und 14 zu entnehmen ist, ist bei beiden Ausführungsformen auf einer dem ersten Kraftfahrzeug-Bauteil 2 abgewandten Seitenfläche 27 des zweiten Kraftfahrzeug-Bauteils 3 ein Klemmrand 28 ausgebildet, wohingegen eine dem ersten Kraftfahrzeug-Bauteil 2 zugewandte Seitenfläche 29 des zweiten Kraftfahrzeug-Bauteils 3 eine Klemmfläche 30 aufweist. Im zusammengebauten Zustand des Kraftfahrzeug-Befestigungssystems 1 erstreckt sich bei beiden Ausführungsformen ein jeweiliger Fixierungsansatz 8 abschnittsweise durch eine in dem zweiten Kraftfahrzeugbauteil 3 ausgeformte und den Klemmrand 28 aufweisende Durchgangsöffnung 31 (siehe zum Beispiel Figuren 11, 13, 15 oder 17), wobei ein jeweiliger Fixierungsabschnitt 10 zumindest abschnittsweise auf dem Klemmrand 28 aufliegt und den Klemmrand 28 hintergreift. Ferner liegt die Klemmfläche 30 bei beiden Ausführungsformen auf den Auflageelementen 16 derart auf, dass die Fixierungsabschnitte 10 und die Auflageelemente 16 den Klemmrand 28 und die Klemmfläche 30 zwischen sich einklemmen. Eine jeweilige Durchgangsöffnung 31 des zweiten Kraftfahrzeug-Bauteils 3 weist dabei einen Montageabschnitt 34, welcher kleiner als das verdickte Ende 11 und größer als der Fixierungsansatz 8 ausgebildet ist, und einen Demontageabschnitt 35, welcher größer als das verdickte Ende 11 ausgebildet ist, auf. Zur Befestigung der Befestigungsplatte 4 an dem zweiten Kraftfahrzeug-Bauteil 3 werden die Fixierungsabschnitte 8 mit den verdickten Enden 11 in die Demontageabschnitte 35 eingesteckt und anschließend in die Montageabschnitte 34 gedrückt.

Für die Erfindung ist es charakteristisch, dass der Klemmrand 28 und die Klemmfläche 30 mit einem vorbestimmten Höhenabstand 32 zueinander ausgebildet sind (siehe Figuren 12 und 16). Denn dieser Höhenabstand 32 ist auf die Befestigungsplatte 4 und die Auflageelemente 16 abgestimmt, so dass lediglich Anpassungen an dem zweiten Kraftfahrzeug-Bauteil 3 vorzunehmen sind, wohingegen die Befestigungsplatte 4 und die Auflageelemente 16 sowie das erste Kraftfahrzeug-Bauteil 2 nicht anzupassen sind. Bei der ersten Ausführungsform ist die vorgegebene Wandstärke 26 des Karosserieblechs 7 gleich dem vorbestimmten Höhenabstand 32 (siehe Figur 12). Hingegen ist bei der zweiten Ausführungsform die vorgegebene Wandstärke 26 des Karosserieblechs 7 kleiner als der vorbestimmte Höhenabstand 32 (siehe Figur 16). Um diesen Unterschied auszugleichen, ist bei der zweiten Ausführungsform eine Vertiefung 33 in dem zweiten Kraftfahrzeug-Bauteil 3 ausgeformt. Diese Vertiefung 33 ist von dem ersten Kraftfahrzeug-Bauteil 2 weggerichtet und nach Art einer Sicke ausgeformt, wobei die Durchgangsöffnungen 31 und die dazugehörigen Klemmränder 28 innerhalb der Vertiefung 31 ausgebildet sind, wohingegen die Klemmfläche 30 außerhalb der Vertiefung 31 an dem zweiten Kraftfahrzeug-Bauteil 3 angeordnet ist. Mit Hilfe der Erfindung ist es somit möglich, den vorbestimmten Höhenabstand 32 immer gleichbleibend und unabhängig von der Wandstärke 26 des zweiten Kraftfahrzeug-Bauteils 3 auszubilden, wobei der Höhenabstand 32 durch den Abstand zwischen dem Klemmrand 28 und der Klemmfläche 30 definiert ist. Dadurch sind keine Modifikationen an der Befestigungsplatte 4 oder dem ersten Kraftfahrzeug-Bauteil 2 notwendig, so dass sich eine Anpassung allein auf das zweite Kraftfahrzeug-Bauteil 3 richtet, wodurch es möglich ist, beispielsweise die Befestigungsplatte 4 mit Hilfe eines Spritzgießverfahrens kostengünstig herzustellen, wobei es ebenso von Vorteil ist, wenn an dem ersten Kraftfahrzeug-Bauteil 2, welches als ein Aktuator 5 ausgebildet ist, keinerlei Modifikationen vorgenommen werden müssen.

Bei beiden Ausführungsformen, die in den Figuren 10 bis 17 dargestellt sind und die sich lediglich in der Ausgestaltung des zweiten Kraftfahrzeug-Bauteils 3 unterscheiden, sind die Auflageelemente 16 jeweils als der sich in Richtung der Klemmfläche 30 erstreckender und die Klemmfläche 30 in Richtung des Fixierungsabschnitts 10 drückender Stützsteg 17 ausgebildet, wobei im zusammengebauten Zustand des Kraftfahrzeug-Befestigungssystems 1 die jeweilige Außenumfangsnut 18 in den zugehörigen Fixierungsrändern 25 zumindest abschnittsweise eingesteckt angeordnet sind. Dabei hält ein jeweiliger Entkopplungsabschnitt 19 der entsprechenden Auflageelemente 16 die Befestigungsplatte 4 von dem ersten Kraftfahrzeug-Bauteil 2 auf Abstand, wobei ein jeweiliger Stützabschnitt 20 der entsprechenden Auflageelemente 16 gegen die Klemmfläche 30 des zweiten Kraftfahrzeug-Bauteils 3 drückt. Vorzugsweise sind die jeweiligen Auflageelemente 16 elastisch verformbar ausgebildet, wobei sie aus Gummi oder Kautschuk bestehen können oder aus einer Gummi oder Kautschuk enthaltenen Mischung bestehen können.

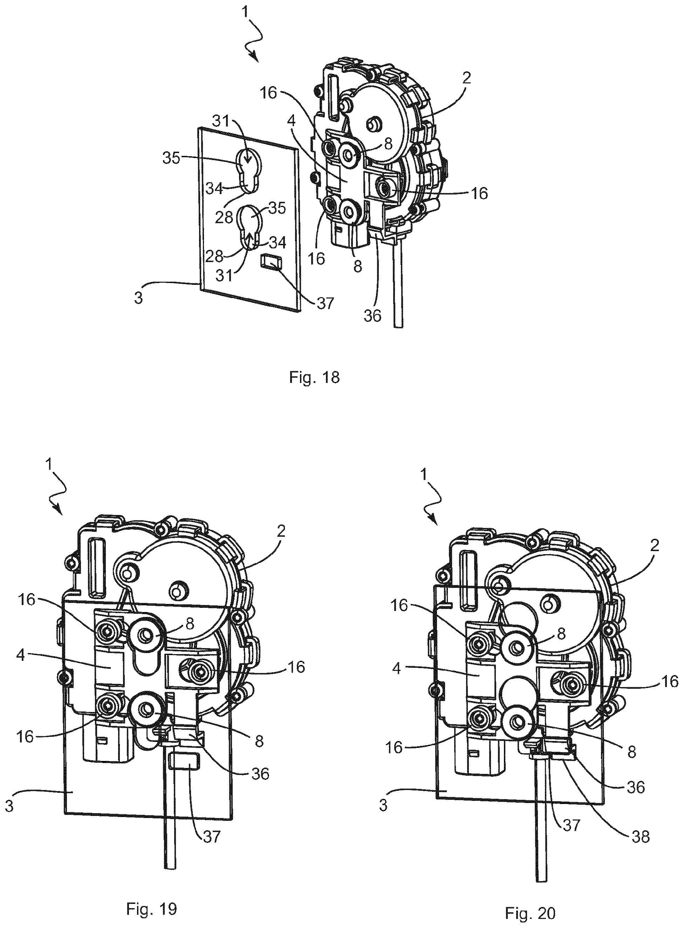

In den Figuren 18 bis 20 sind einzelne Schritte des Zusammenbaus des Kraftfahrzeug-Befestigungssystems 1 gezeigt, wobei in der Figur 18 eine perspektivische Ansicht auf das erfindungsgemäße Kraftfahrzeug-Befestigungssystem 1 vor Befestigung des ersten Kraftfahrzeug-Bauteils 2 an dem zweiten Kraftfahrzeug-Bauteil 3 gezeigt ist. In Figur 18 ist die Befestigungsplatte 4 bereits an dem ersten Kraftfahrzeug-Bauteil 2 befestigt, wie es vorstehend bereits beschrieben wurde. Zur Befestigung werden die Fixierungsansätze 8 in die zugehörigen Demontageabschnitte 35 der Durchgangsöffnungen 31 eingesteckt, bis die Anlageelemente 16 auf der Klemmfläche 30 des zweiten Kraftfahrzeug-Bauteils 3 anliegen. Dieser Zustand ist in Figur 19 gezeigt, wobei das zweite Kraftfahrzeug-Bauteil 3 in dieser Ansicht transparent dargestellt ist, um eine Sicht auf die unter dem zweiten Kraftfahrzeug-Bauteil 3 angeordneten Bauteile frei zu geben. Aus der in Figur 19 gezeigten Stellung werden dann die Fixierungsansätze 8 aus den Demontageanschnitten 35 der Durchgangsöffnungen 31 in die Montageabschnitte 34 bewegt, wodurch die Befestigungsplatte 4 mit Bezug auf die Figuren 19 und 20 und relativ zu dem zweiten Kraftfahrzeug-Bauteil 3 nach unten bewegt wird. Dadurch gelangen die Fixierungsabschnitte 10 in Anlage an die Klemmränder 28, so dass die Fixierungsabschnitte 10 mit den Montageabschnitten 34 eine formschlüssige Verbindung eingehen. Insgesamt sind damit die Klemmränder 28 und die Klemmfläche 30, zwischen denen der vorbestimmte Höhenabstand 32 ausgebildet ist, zwischen den Fixierungsabschnitten 10 und den Anlageelementen 16 eingeklemmt gehalten. Zur Sicherung dieser in Figur 20 gezeigten Stellung ist an der Befestigungsplatte 4 ein Rastmittel 36 angeformt, welches elastisch bewegbar ausgebildet ist (siehe beispielsweise Figuren 4 und 5). Ferner ist an dem zweiten Kraftfahrzeug-Bauteil 3 eine Rastaufnahme 37 ausgeformt, welche mit dem Rastmittel 36 in Eingriff bringbar ist. Wenn die Fixierungsansätze 8 aus den Demontageanschnitten 35 der Durchgangsöffnungen 31 in die Montageabschnitte 34 bewegt werden, dann gelangt das Rastmittel 36 in Eingriff mit der Rastaufnahme 37, so dass eine Bewegung der Fixierungsabschnitte 10 aus den Montageabschnitten 34 in Richtung der Demontageabschnitts 35 blockiert ist. Durch die elastisch bewegbare Ausbildung des hakenförmig ausgebildeten Rastmittels 36 kann dieses relativ leicht manuell durch Betätigung eines an dem Rastmittel 36 ausgebildeten Manipulationsabschnitts 38 von einem Monteur außer Eingriff mit der Rastaufnahme 37 gebracht werden, wenn das erste Kraftfahrzeug-Bauteil 2 von dem zweiten Kraftfahrzeug-Bauteil 3 demontiert werden soll.

Die beschriebene Erfindung ist selbstverständlich nicht auf die beschriebenen und dargestellten Ausführungsformen beschränkt.

## Patentansprüche

1. Kraftfahrzeug-Befestigungssystem (1) mit einem ersten Kraftfahrzeug-Bauteil (2), einem zweiten Kraftfahrzeug-Bauteil (3) und einer Befestigungsplatte (4),
wobei das erste Kraftfahrzeug-Bauteil (2) mit der Befestigungsplatte (4) lösbar verbunden ist,
wobei auf einer dem ersten Kraftfahrzeug-Bauteil (2) abgewandten Seitenfläche (27) des zweiten Kraftfahrzeug-Bauteils (3) ein Klemmrand (28) ausgebildet ist und eine dem ersten Kraftfahrzeug-Bauteil (2) zugewandte Seitenfläche (29) des zweiten Kraftfahrzeug-Bauteils (3) eine Klemmfläche (30) ausbildet,
wobei die Befestigungsplatte (4) wenigstens einen Fixierungsansatz (8) aufweist, welcher sich zumindest abschnittsweise durch eine in dem zweiten Kraftfahrzeugbauteil (3) ausgeformte und den Klemmrand (28) aufweisende Durchgangsöffnung (31) erstreckt,
wobei an einem freien Ende (9) des Fixierungsansatzes (8) ein Fixierungsabschnitt (10) ausgebildet ist, welcher zumindest abschnittsweise auf dem Klemmrand (28) aufliegt und den Klemmrand (28) hintergreift, und die Befestigungsplatte (4) wenigstens ein Auflageelement (16) aufweist, auf welchem die Klemmfläche (30) derart aufliegt, dass der Fixierungsabschnitt (10) und das Auflageelement (16) den Klemmrand (28) und die Klemmfläche (30) zwischen sich einklemmen,
wobei der Klemmrand (28) und die Klemmfläche (30) mit einem vorbestimmten Höhenabstand (32) zueinander ausgebildet sind,
wobei das wenigstens eine Auflageelement (16) als ein sich in Richtung der Klemmfläche (30) erstreckender und die Klemmfläche (30) in Richtung des Fixierungsabschnitts (10) drückender Stützsteg (17) ausgebildet ist, und
wobei der Stützsteg (17) mit einer Außenumfangsnut (18) ausgebildet ist, welche den Stützsteg (17) in einen Entkopplungsabschnitt (19) und einen Stützabschnitt (20) unterteilt, wobei die Befestigungsplatte (4) ein Durchgangsloch (12) mit einem ersten Lochabschnitt (14), welcher einen an die Außenumfangsnut (18) angepassten Fixierungsrand (25) aufweist, und einem zweiten Lochabschnitt (15), welcher größer ausgebildet ist als der Außenumfang (24) des Stützstegs (17), aufweist, und wobei die Außenumfangsnut (18) in den Fixierungsrand (25) eingesteckt angeordnet ist, der Entkopplungsabschnitt (19) die Befestigungsplatte (4) von dem ersten Kraftfahrzeug-Bauteil (2) auf Abstand hält und der Stützabschnitt (20) gegen die Klemmfläche (30) drückt.

2. Kraftfahrzeug-Befestigungssystem (1) nach Anspruch 1, wobei das zweite Kraftfahrzeug-Bauteil (3) als ein Karosserieblech (7) mit einer vorgegebenen Wandstärke (26) ausgebildet ist.

3. Kraftfahrzeug-Befestigungssystem (1) nach Anspruch 2, wobei die vorgegebene Wandstärke (26) des Karosserieblechs (7) gleich dem vorbestimmten Höhenabstand (32) ist.

4. Kraftfahrzeug-Befestigungssystem (1) nach Anspruch 2, wobei die vorgegebene Wandstärke (26) des Karosserieblechs (7) kleiner als der vorbestimmte Höhenabstand (32) ist, wobei die Durchgangsöffnung (31) und der Klemmrand (28) an einer von dem ersten Kraftfahrzeug-Bauteil (2) weg gerichteten Vertiefung (33) in dem Karosserieblech (7) ausgebildet sind, und wobei die Klemmfläche (30) außerhalb der Vertiefung (33) an dem Karosserieblech (7) angeordnet ist.

5. Kraftfahrzeug-Befestigungssystem (1) nach einem der vorhergehenden Ansprüche, wobei der Fixierungsabschnitt (10) als ein verdicktes Ende (11) ausgebildet ist, wobei die Durchgangsöffnung (31) des zweiten Kraftfahrzeug-Bauteils (3) einen Montageabschnitt (34), welcher kleiner als das verdickte Ende (11) und größer als der Fixierungsansatz (8) ausgebildet ist, und einen Demontageabschnitt (35), welcher größer als das verdickte Ende (11) ausgebildet ist, aufweist.

6. Kraftfahrzeug-Befestigungssystem (1) nach Anspruch 5, wobei an dem zweiten Kraftfahrzeug-Bauteil (3) eine Rastaufnahme (37) ausgeformt ist und an der Befestigungsplatte (4) ein Rastmittel (36) angeformt ist, wobei das Rastmittel (36) mit der Rastaufnahme (37) in Eingriff steht und eine Bewegung des Fixierungsabschnitts (10) aus dem Montageabschnitt (34) in Richtung des Demontageabschnitts (35) blockiert.

7. Kraftfahrzeug-Befestigungssystem (1) nach Anspruch 1, wobei wenigstens zwei Auflageelemente (16) vorgesehen sind, die jeweils hohlzylinderförmig ausgebildet sind, wobei sich jeweils ein Fixierungselement (21) mit einem Stützkopf (22) durch ein jeweiliges hohlzylinderförmig ausgebildetes Auflageelement (16) hindurch erstreckt und mit dem ersten Kraftfahrzeug-Bauteil (2) in Eingriff steht, und wobei der jeweilige Stützkopf (22) auf einer innerhalb des jeweiligen hohlzylinderförmig ausgebildeten Auflageelements (16) ausgebildeten Stufe (23) aufliegt.

8. Kraftfahrzeug-Befestigungssystem (1) nach Anspruch 7, wobei die Befestigungsplatte (4) wenigstens zwei Durchgangslöcher (12) aufweist, die sich spiegelsymmetrisch zueinander erstrecken, wobei die zweiten Lochabschnitte (15) der Durchgangslöcher (12) geringer beabstandet zueinander angeordnet sind als die ersten Lochabschnitte (14) der Durchgangslöcher (12).

9. Kraftfahrzeug-Befestigungssystem (1) nach einem der vorhergehenden Ansprüche, wobei das wenigstens eine Auflageelement (16) elastisch verformbar ausgebildet ist.

10. Kraftfahrzeug-Befestigungssystem (1) nach einem der vorhergehenden Ansprüche, wobei das erste Kraftfahrzeug-Bauteil (2) und die Befestigungsplatte (4) über eine formschlüssige Verbindung und/oder kraftschlüssige Verbindung akustisch voneinander entkoppelt miteinander verbunden sind.

## Claims

1. A motor vehicle fastening system (1) with a first motor vehicle component (2), a second motor vehicle component (3) and a fastening plate (4),
wherein the first motor vehicle component (2) is detachably connected with the fastening plate (4),
wherein a clamping edge (28) is formed on a lateral surface (27) of the second motor vehicle component (3) facing away from the first motor vehicle component (2), and a lateral surface (29) of the second motor vehicle component (3) facing the first motor vehicle component (2) forms a clamping surface (30),
wherein the fastening plate (4) has at least one fixing lug (8), which at least sectionally extends through a passage opening (31) that is formed in the second motor vehicle component (3) and has the clamping edge (28),
wherein a fixing section (10) is formed at a free end (9) of the fixing lug (8), and at least sectionally rests on the clamping edge (28) and engages behind the clamping edge (28), and the fastening plate (4) has at least one support element (16), on which the clamping surface (30) rests in such a way that the fixing section (10) and the support element (16) have the clamping edge (28) and clamping surface (30) clamped between them,
wherein the clamping edge (28) and the clamping surface (30) are designed to have a predetermined vertical distance (32) from each other,
wherein the at least one support element (16) is designed as a support web (17) that extends in the direction of the clamping surface (30) and presses the clamping surface (30) in the direction of the fixing section (10), and
wherein the support web (17) is designed with an outer circumferential groove (18), which divides the support web (17) into a decoupling section (19) and a support section (20), wherein the fastening plate (4) has a through hole (12) with a first hole section (14), which has a fixing edge (25) adjusted to the outer circumferential groove (18), and a second hole section (15), which is larger in design than the outer circumference (24) of the support web (17), and wherein the outer circumferential groove (18) is arranged inserted into the fixing edge (25), the decoupling section (19) spaces the fastening plate (4) apart from the first motor vehicle component (2), and the support section (20) presses against the clamping surface (30).

2. The motor vehicle fastening system (1) according to claim 1, wherein the second motor vehicle component (3) is designed like a body panel (7) with a prescribed wall thickness (26).

3. The motor vehicle fastening system (1) according to claim 2, wherein the prescribed wall thickness (26) of the body panel (7) is equal to the predetermined height distance (32).

4. The motor vehicle fastening system (1) according to claim 2, wherein the prescribed wall thickness (26) of the body panel (7) is smaller than the predetermined height distance (32), wherein the through opening (31) and the clamping edge (28) are formed on a depression (33) in the body panel (7) directed away from the first motor vehicle component (2), and wherein the clamping surface (30) is arranged outside of the depression (33) on the body panel (7).

5. The motor vehicle fastening system (1) according to one of the preceding claims, wherein the fixing section (10) is designed as a thickened end (11), wherein the through opening (31) of the second motor vehicle component (3) has an assembly section (34) that is smaller than the thickened end (11) and larger than the fixing lug (8) in design, and a disassembly section (35) that is larger than the thickened end (11) in design.

6. The motor vehicle fastening system (1) according to claim 5, wherein a latching receptacle (37) is formed on the second motor vehicle component (3), and a latching means (36) is molded on the fastening plate (4), wherein the latching means (36) engages with the latching receptacle (37), and blocks a movement of the fixing section (10) out of the assembly section (34) in the direction of the disassembly section (35).

7. The motor vehicle fastening system (1) according to claim 1, wherein at least two support elements (16) are provided, which each are hollow cylindrical in design, wherein a respective fixing element (21) with a support head (22) extends through a respective support element (16) having a hollow cylindrical design and engages with the first motor vehicle component (2), and wherein the respective support head (22) rests on a step (23) formed within a respective support element (16) having a hollow cylindrical design.

8. The motor vehicle fastening system (1) according to claim 7, wherein the fastening plate (4) has at least two through holes (12), which extend mirror symmetrically to each other, wherein the second hole sections (15) of the through holes (12) are arranged spaced less apart from each other than the first hole sections (14) of the through holes (12).

9. The motor vehicle fastening system (1) according to one of the preceding claims, wherein the at least one support element (16) is elastically deformable in design.

10. The motor vehicle fastening system (1) according to one of the preceding claims, wherein the first motor vehicle component (2) and the fastening plate (4) are connected with each other acoustically decoupled from each other by a positive connection and/or nonpositive connection.

## Revendications

1. Système de fixation pour véhicule automobile (1) avec un premier composant de véhicule automobile (2), un deuxième composant de véhicule automobile (3) et une plaque de fixation (4),
sachant que le premier composant de véhicule automobile (2), est relié à la plaque de fixation (4) de façon amovible,
sachant qu'un bord de serrage (28) est constitué sur une première surface latérale (27) du deuxième composant de véhicule automobile (3) opposée au premier composant de véhicule automobile (2) et une surface latérale (29) du deuxième composant de véhicule automobile (3) tournée vers le premier composant de véhicule automobile (2) constitue une surface de serrage (30),
sachant que la plaque de fixation (4) comporte au moins un embout de fixation (8), lequel s'étend au moins en partie à travers une ouverture de passage (31) formée dans le deuxième composant de véhicule automobile (3) et comportant le bord de serrage (28),
sachant que sur une extrémité libre (9) de l'embout de fixation (8) est constituée une section de fixation (10), laquelle repose au moins en partie sur le bord de serrage (28) et vient en prise par l'arrière avec le bord de serrage (28) et la plaque de fixation (4) comporte au moins un élément d'appui (16), sur lequel repose la surface de serrage (30) de telle manière que la section de fixation (10) et l'élément d'appui (16) serrent entre eux le bord de serrage (28) et la surface de serrage (30),
sachant que le bord de serrage (28) et la surface de serrage (30) sont constitués l'un par rapport à l'autre avec une distance en hauteur (32) prédéterminée,
sachant qu'au moins un élément d'appui (16) est constitué comme une moulure de support (17) s'étendant en direction de la surface de serrage (30) et comprimant la surface de serrage (30) en direction de la section de fixation (10) et
sachant que la moulure de support (17) est constituée avec une rainure périphérique extérieure (18), laquelle divise la moulure de support (17) en une section de découplage (19) et une section de support (20), sachant que la plaque de fixation (4) comporte un trou de passage (12) avec une première section de trou (14), laquelle comporte un bord de fixation (25) adapté à la rainure périphérique extérieure (18) et une deuxième section de trou (15), laquelle est constituée plus grande que la périphérie extérieure (24) de la moulure de support (17) et sachant que la rainure périphérique extérieure (18) est disposée emboîtée dans le bord de fixation (25), la section de découplage (19) maintient à distance la plaque de fixation (4) du premier composant de véhicule automobile (2) et la section de support (20) appuie contre la surface de serrage (30).

2. Système de fixation pour véhicule automobile (1) selon la revendication 1, sachant que le deuxième composant de véhicule automobile (3) est constitué comme une tôle de carrosserie (7) avec une épaisseur de paroi (26) prédéfinie.

3. Système de fixation pour véhicule automobile (1) selon la revendication 2, sachant que l'épaisseur de paroi (26) prédéfinie de la tôle de carrosserie (7) est égale à la distance en hauteur (32) prédéterminée.

4. Système de fixation pour véhicule automobile (1) selon la revendication 2, sachant que l'épaisseur de paroi (26) prédéfinie de la tôle de carrosserie (7) est plus petite que la distance de hauteur (32) prédéterminée, sachant que l'ouverture de passage (31) et le bord de serrage (28) sont constitués sur une cavité (33) orientée éloignée du premier composant de véhicule automobile (2) dans la tôle de carrosserie (7) et sachant que la surface de serrage (30) est disposée en dehors de la cavité (33) sur la tôle de carrosserie (7) .

5. Système de fixation pour véhicule automobile (1) selon l'une quelconque des revendications précédentes, sachant que la section de fixation (10) est constituée comme une extrémité renforcée (11), sachant que l'ouverture de passage (31) du deuxième composant de véhicule automobile (3) comporte une section de montage (34), laquelle est constituée plus petite que l'extrémité renforcée (11) et plus grande que l'embout de fixation (8) et une section de démontage (35), laquelle est plus grande que l'extrémité renforcée (11) .

6. Système de fixation pour véhicule automobile (1) selon la revendication 5, sachant qu'un logement d'enclenchement (37) est formé sur le deuxième composant de véhicule automobile (3) et un moyen d'encliquetage (36) est conformé sur la plaque de fixation (4), sachant que le moyen d'encliquetage (36) vient en prise avec le logement d'enclenchement (37) et bloque un mouvement de la section de fixation (10) hors de la section de montage (34) en direction de la section de démontage (35).

7. Système de fixation pour véhicule automobile (1) selon la revendication 1, sachant qu'au moins deux éléments d'appui (16) sont prévus, qui sont constitués respectivement en forme de cylindre creux, sachant qu'un élément de fixation (21) avec une tête de support (22) s'étend respectivement à travers un élément d'appui (16) respectif constitué en forme de cylindre creux et est en prise avec le premier composant de véhicule automobile (2) et sachant que la tête de support (22) respective repose sur un gradin (23) constitué à l'intérieur de l'élément d'appui (16) respectif constitué en forme de cylindre creux.

8. Système de fixation pour véhicule automobile (1) selon la revendication 7, sachant que la plaque de fixation (4) comporte au moins deux trous de passage (12), qui s'étendent en symétrie spéculaire l'un par rapport à l'autre, sachant que les deuxièmes sections de trou (15) des trous de passage (12) sont disposées à une plus faible distance l'une de l'autre que les premières sections de trou (14) des trous de passage (12).

9. Système de fixation pour véhicule automobile (1) selon l'une quelconque des revendications précédentes, sachant qu'au moins un élément d'appui (16) est constitué pouvant être élastiquement déformé.

10. Système de fixation pour véhicule automobile (1) selon l'une quelconque des revendications précédentes, sachant que le premier composant de véhicule automobile (2) et la plaque de fixation (4) sont reliés l'un à l'autre découplés acoustiquement l'un de l'autre par une liaison par conformité de forme et/ou une liaison par conformité de force.
